# NOUVEAU FASCICULE DE BREVET EUROPEEN

(11) **EP 2 137 445 B2**
(45) Date de publication et mention de la décision concernant l'opposition: **25.03.2020**
(45) Mention de la délivrance du brevet: 19.06.2013
(21) Numéro de dépôt: 08787830.2
(22) Date de dépôt: 21.03.2008
(51) Int. Cl.: F16L 11/08

(54) **CONDUITE FLEXIBLE POUR LE TRANSPORT DES HYDROCARBURES À COUCHE DE MAINTIEN RENFORCÉE**
BIEGSAME LEITUNG ZUR FÖDERUNG VON KOHLENWASSERSTOFFEN MIT VERSTÄRKTER ERHALTUNGSSCHICHT
FLEXIBLE DUCT FOR CONVEYING HYDROCARBONS AND HAVING A REINFORCED MAINTAIN LAYER

(30) Priorité: 21.03.2007 FR 0702065; 21.03.2007 FR 0702066
(43) Date de publication de la demande: 30.12.2009
(73) Titulaire: Technip France, 92400 Courbevoie (FR)
(72) Inventeur: DO, Anh, Tuan, F-95240 Cormeilles-en-Parisis (FR); JUNG, Patrice, Joël, Louis, F-76940 La Mailleraye sur Seine (FR); COUTAREL, Alain, F-76130 Mont Saint Aignan (FR)
(74) Mandataire: Fédit-Loriot
(86) Numéro de dépôt international: PCT/FR2008/000383
(87) Numéro de publication internationale: WO 2008/135663

(56) Documents cités:
- WO-A-97/12753
- WO-A-2005/043020
- WO-A-2006/005689
- FR-A1- 2 837 899
- US-A- 3 116 760
- US-A- 6 165 586
- US-A1- 2004 175 523
- US-A1- 2005 115 623
- US-B1- 6 491 779
- US-B1- 6 620 471
- US-B2- 6 691 743

## Description

La présente invention se rapporte à une conduite flexible sous-marine destinée au transport des hydrocarbures en eau profonde.

Les conduites flexibles de transport des hydrocarbures sont déjà bien connues, et elles comportent généralement de l'intérieur vers l'extérieur de la conduite; une carcasse métallique, une gaine d'étanchéité interne en polymère, une voûte de pression, des nappes d'armures de traction et une gaine externe en polymère pour protéger l'ensemble de la conduite et notamment pour empêcher l'eau de mer de pénétrer dans son épaisseur. La carcasse métallique et la voûte de pression sont constituées d'éléments longitudinaux enroulés à pas court, et elles confèrent à la conduite sa résistance aux efforts radiaux tandis que les nappes d'armures de traction sont constituées de fils métalliques enroulés selon des pas longs pour reprendre les efforts axiaux. La nature, le nombre, le dimensionnement et l'organisation des couches constituant les conduites flexibles sont essentiellement liés à leurs conditions d'utilisation et d'installation. Dans la présente demande, la notion d'enroulement à pas court désigne tout enroulement hélicoïdal selon un angle d'hélice proche de 90°, typiquement compris entre 75° et 90°. La notion d'enroulement à pas long recouvre quant à elle les angles d'hélice inférieurs à 55°, typiquement compris entre 25° et 55° pour les nappes d'armures.

Ces conduites flexibles sont destinées au transport des hydrocarbures notamment dans les fonds marins et ce, à de grandes profondeurs. Plus précisément elles sont dites de type non lié («unbonded» en langue anglaise) et elles sont ainsi décrites dans les documents normatifs publiés par l'American Petroleum Institute (API), API 17 J et API RP 17B.

Lorsque la conduite flexible, quelle que soit sa nature, est soumise à une pression externe qui est plus élevée que la pression interne, il peut se produire une compression axiale qui est connue de l'homme du métier sous le nom d'effet de fond inverse (« reverse end cap effect » en langue anglaise). L'effet de fond inverse a tendance à comprimer axialement la conduite flexible, à raccourcir sa longueur et à augmenter son diamètre, ce qui a tendance à provoquer un gonflement des nappes d'armures de traction. Dans le cas où la gaine externe de la conduite est étanche, la pression hydrostatique régnant à l'extérieur de la conduite s'oppose efficacement au gonflement des armures de traction. Par contre, si la gaine externe n'est plus étanche, par exemple suite à une déchirure accidentelle, la pression hydrostatique ne s'oppose plus au gonflement des nappes d'armures de traction. Par suite, en l'absence d'un moyen additionnel ayant pour fonction de limiter ce gonflement, les fils composant les nappes d'armures de traction peuvent flamber selon un mode radial, ce qui peut provoquer une déformation locale irréversible desdites nappes d'armures ayant la forme d'une « cage d'oiseau », et ainsi entraîner la ruine de la conduite.

Une solution connue permettant de réduire ce risque de flambement radial en "cage d'oiseau" consiste à enrouler à pas court, autour des nappes d'armures de traction, des rubans renforcés de fibres d'aramide, et plus précisément de fibres commercialisées sous la marque Kevlar® par la société DuPont de Nemours. De tels rubans présentent une grande résistance mécanique en traction suivant leur axe longitudinal, ce qui permet de limiter le gonflement des nappes d'armures de traction. Ils présentent en outre une grande souplesse en flexion, ce qui facilite les opérations de manutention et d'enroulement autour des nappes d'armures. Enfin, à caractéristiques mécaniques égales, ils sont beaucoup plus légers que des rubans métalliques, ce qui permet de réduire le poids de la conduite flexible. On pourra notamment se référer au document FR 2 837 899 dans lequel une telle conduite est divulguée.

Ces rubans de renfort se présentent sous la forme de faisceaux de mèches de fibres ou mèches filamentaires en Kevlar® orientées parallèlement à l'axe longitudinal du ruban. Ces mèches de fibres longitudinales peuvent être assemblées les unes avec les autres sous la forme d'un faisceau relativement plat ayant une section sensiblement rectangulaire du type de celle d'un ruban ou d'une bande. Il est également possible d'utiliser un ruban de renfort constitué d'une section centrale sensiblement rectangulaire et de deux bords longitudinaux plus minces que la section centrale tel que décrit dans le document EP1419338. Les moyens d'assemblage et de contention de ces mèches de fibres ou mèches filamentaires, comportent généralement des élément transverses qui sont conformés de manière à entourer et à serrer ensemble lesdites mèches de façon à former un faisceau relativement plat. Dans les configurations courantes, ces éléments transverses sont assimilables à des fils de trame, les mèches filamentaires formant la chaîne, et le ruban pouvant alors être considéré comme un matériau tissé. Différents modes de réalisation de ces rubans de renfort sont décrits dans les documents WO97/12753 et WO9713091.

Cependant, il a été constaté malgré cela, que dans des conditions extrêmes d'utilisation, ces rubans de renfort pouvaient se détériorer. Ces conditions extrêmes se rencontrent principalement lorsque la conduite flexible est d'une part immergée à grande profondeur, typiquement à plus de 2000m, et d'autre part simultanément soumise à des sollicitations dynamiques en flexion, ce qui génère un phénomène de fatigue des rubans de renfort. Ces conditions peuvent être réunies au niveau de la partie inférieure des conduites montantes flexibles (« flexible risers » en langue anglaise) disposées en caténaire, et assurant la liaison entre le fond marin et un support flottant à la surface. Du fait des mouvements du support flottant, la partie inférieure de la caténaire peut être soumise à des variations importantes de courbure. De plus; cette zone dynamique est localisée à proximité du point de contact avec le fond marin (« touch down point» en langue anglaise), c'est-à-dire potentiellement à grande profondeur.

Aussi, un problème qui se pose et que vise à résoudre la présente invention est de fournir une conduite flexible sous-marine qui puisse résister dans ces conditions extrêmes de profondeur et de sollicitations dynamiques en flexion, et pour laquelle le gonflement des armures de traction puisse être durablement contenu pour éviter le flambement radial en « cage d'oiseau».

Dans le but de résoudre ce problème, la présente invention propose une conduite flexible sous-marine destinée au transport des hydrocarbures selon la revendication 1.

Ainsi, une caractéristique de l'invention réside dans la mise en oeuvre du ruban de maintien et de la couche de renfort en matériau polymère, avec la couche textile intercalée entre les mèches de fibres et la couche de renfort, lesquels permettent ensemble d'augmenter globalement la rigidité en flexion du ruban de maintien revêtu et partant, la résistance à la déformation de la couche de maintien. En effet, il a été découvert que cette caractéristique permet d'augmenter significativement la durée de vie de la couche de maintien de la conduite flexible, lorsque cette dernière est immergée à grande profondeur et simultanément soumise à des sollicitations dynamiques en flexion.

Des essais longs et minutieux ont été nécessaires pour comprendre les phénomènes de détérioration de la couche de maintien et mettre au point la présente invention. Ces essais ont été techniquement difficiles à mettre en oeuvre, puisqu'il a fallu tester en grandeur réelle des tronçons de conduite flexible en les soumettant simultanément à une pression extérieure très importante et à des variations de courbure.

Cette invention présente un caractère surprenant et va à l'encontre de plusieurs préjugés de l'homme du métier. En effet, ce dernier considérait naturellement que, plus la profondeur est importante, plus l'effet de fond inverse est élevé et, par suite, plus les moyens destinés à empêcher le gonflement des nappes d'armures de traction doivent être résistants. Or, lorsque la couche de maintien exerce sa fonction de limitation de gonflement des nappes d'armures de traction, le ruban de maintien est quant à lui principalement sollicité en traction selon une direction sensiblement parallèle à son axe longitudinal, c'est-à-dire à celle des mèches de fibres. Par suite, l'homme du métier avait auparavant cherché à maximiser la résistance à la traction des rubans de maintien. De plus, afin de faciliter la fabrication de la couche de maintien, il avait aussi cherché à minimiser la rigidité en flexion du ruban de maintien, ce qui permettait de réaliser l'opération d'enroulement avec une rubaneuse de faible puissance. Or, la présente invention va à l'encontre de ces deux pratiques, puisque le fait de revêtir le ruban de maintien d'une couche de renfort en matériau polymère conduit d'une part à une diminution de sa résistance mécanique en traction à section transverse égale (augmentation de la section à quantité égale de mèches de fibres), et d'autre part à une augmentation de sa rigidité en flexion.

Ainsi, la couche de renfort en matériau polymère augmente la rigidité en flexion du ruban de maintien, ce qui de façon surprenante limite le phénomène précité de fatigue.

La couche de renfort en matériau polymère est avantageusement réalisée en polyamide, en polyéthylène ou en polypropylène ou encore en polyester ; les polymères fluorés tels les PVDF peuvent également convenir. Les polymères adaptés sont de préférence des polymères thermoplastiques.

Au surplus, le ruban de maintien est orienté avantageusement, de façon que la couche de renfort soit directement en contact avec les armures. Ainsi, les fibres des mèches sont-elles préservées de l'usure par leur frottement contre les armures.

Selon un mode particulier de mise en œuvre de l'invention, ladite couche de renfort et ledit ruban de maintien sont au moins partiellement interpénétrés l'un dans l'autre, de façon à obtenir une parfaite cohésion de la couche de renfort et du ruban de maintien. De la sorte, les propriétés mécaniques du ruban de maintien, en termes de résistance à la traction, sont conservée de sorte que la couche de renfort est préservée des efforts de traction qui s'exercent sur elle, et cette même couche de renfort peut alors jouer son rôle en rigidifiant le ruban de maintien.

De surcroit, lesdites fibres présentent à température ambiante un module d'élasticité, de préférence, supérieur à 50 GPa. Le module d'élasticité est mesuré par un essai de traction conforme à la norme ASTM D885-04. Cet essai est pratiqué non pas sur une fibre individuelle, mais sur un fil constitué de 500 à 2500 fibres ou filaments identiques et de même longueur. La torsion du fil utilisé pour l'essai est inférieure à 100 tours par mètre et par exemple, de l'ordre de 60 tours par mètres, ce qui permet d'améliorer la reproductibilité et la précision des mesures, en accord avec les recommandations de la norme précitée. La distance entre mors en début d'essai de traction est de l'ordre de 400 mm. La vitesse de traction est de l'ordre de 50 mm /min. La température ambiante à laquelle sont faits ces essais est de l'ordre de 18°C à 23°C.

Par conséquent, grâce à ce module d'élasticité, les mèches de fibres et partant, le ruban de maintien revêtu, reprennent sans trop s'allonger, les efforts de traction qui s'exercent sensiblement tangentiellement au ruban de maintien et empêchent le gonflement des nappes d'armures. Les fibres adaptées à la réalisation de telles mèches sont des fibres organiques, par exemple des fibres d'aramide, ou de polyéthylène à haute performance ou encore de polyester. De telles fibres présentent par ailleurs, et de façon avantageuse, un allongement à la rupture supérieur à 2 %, par exemple 2,5 %. La mesure de cet allongement à la rupture est réalisée par essai de traction selon la norme ASTM D885-04 précitée.

En outre, lesdites mèches de fibres comportant des fibres de coeur entourées par des fibres de surfaces, une portion desdites fibres de surface est avantageusement noyée à l'intérieur dudit matériau polymère de ladite couche de renfort pour relier ensemble ladite couche de renfort et ledit ruban de maintien. De cette façon, la couche de renfort en matériau polymère adhère fortement au ruban de maintien bien plutôt grâce à une liaison mécanique par l'emprisonnement des fibres qu'à une liaison chimique. Le matériau polymère s'étend plus ou moins profondément dans la fibre et emprisonne au moins les fibres de surface.

Par ailleurs, le ruban de maintien comporte en outre, et de façon particulièrement avantageuse, des moyens de contention pour maintenir ensemble lesdites mèches de fibres. Par exemple, ledit ruban de maintien est un matériau tissé et les moyens de contention destinés à maintenir ensemble les différentes mèches de fibres comportent alors au moins un fil de trame tissé avec lesdites mèches qui constituent, elles, les éléments de chaîne. De tels fils de trame n'étant pas soumis aux efforts de tension appliqués à la bande, peuvent avantageusement être réalisés avec une matière peu résistante différente de celle des mèches de fibres.

En outre, lesdites fibres sont maintenues ensemble, de préférence serrées les unes contre les autres, de manière à augmenter leur coefficient de friction les unes par rapport aux autres et à accroître la résistance de la mèche de fibres en traction.

Avantageusement, ledit ruban de maintien comprenant deux faces opposées l'une de l'autre, chacune desdites faces est recouverte de ladite couche de renfort, de manière à augmenter et plus encore la rigidité de la couche de maintien en flexion et aussi préserver le ruban de maintien de l'abrasion sur ses deux faces. De surcroît, et selon un autre mode de mise en oeuvre, ladite couche de renfort forme une gaine autour dudit ruban de maintien en l'enrobant et en le préservant non seulement sur les deux faces opposées mais également sur la tranche.

En outre, la couche de renfort est obtenue par extrusion dudit matériau polymère. Cette couche de renfort est alors, soit directement extrudée sur le ruban de maintien, soit extrudée indépendamment et ensuite rapportée et calandrée avec le ruban de maintien. On expliquera plus en détail dans la suite de la description le mode de réalisation de la couche de renfort sur le ruban de maintien.

De plus, selon l'invention, une couche textile, par exemple une couche textile formant un mat, est intercalée entre les mèches de fibres et la couche de renfort. Le terme mat désigne un voile de fibres courtes non tissées, généralement assemblées par compactage mécanique et/ou collage. De la sorte, l'adhérence entre les mèches de fibres et la couche de renfort est améliorée.

D'autres particularités et avantages de l'invention ressortiront à la lecture de la description faite ci-après de modes de réalisation particuliers, donnés à titre indicatif mais non limitatif, en référence aux dessins annexés sur lesquels :
- La Figure 1 est une vue schématique partielle en perspective d'une conduite flexible selon l'invention ;
- la Figure 2 est une vue schématique partielle en perspective d'un élément de la conduite flexible illustré sur la Figure 1 ;
- la Figure 3 est une vue schématique d'une installation permettant de revêtir d'une couche de renfort, l'élément représenté sur la Figure 2 ;
- La Figure 4 est une vue schématique en coupe droite de l'élément partiellement représenté sur la Figure 2 et revêtu, selon une variante de réalisation selon l'invention;
   Les figures suivantes 5, 6 et 7 illustrent des variantes de réalisation qui ne sont pas conformes à l'invention ;
- La Figure 5 est une vue schématique en coupe droite de l'élément partiellement représenté sur la Figure 2 et revêtu, selon une deuxième variante de réalisation;
- la Figure 6, est une vue schématique en coupe droite de l'élément partiellement représenté sur la Figure 2 et revêtu, selon une troisième variante de réalisation ; et,
- la Figure 7, est une vue schématique en coupe droite de l'élément partiellement représenté sur la Figure 2 et revêtu, selon une quatrième variante de réalisation.

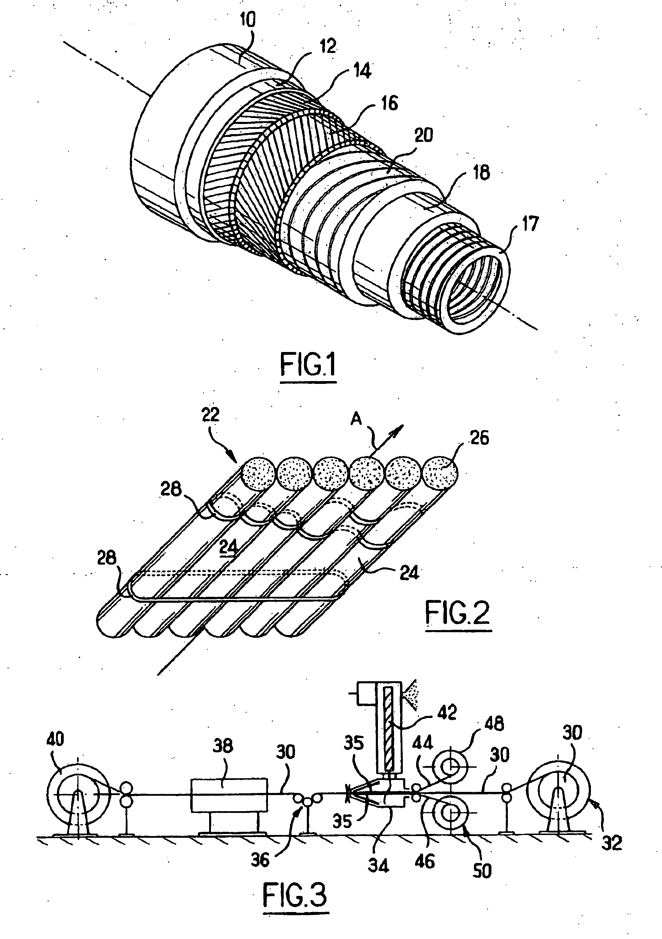

La Figure 1 illustre une conduite conforme à l'invention comprenant, de l'extérieur vers l'intérieur , une gaine polymérique externe d'étanchéité 10 (appelée gaine externe), une couche de maintien 12 que l'on détaillera ci-après enroulée autour d'une nappe externe d'armures de traction 14, une nappe interne d'armures de traction 16 enroulée en sens opposé de la nappe externe 14, une voûte de pression 20 de reprise des efforts radiaux généré par la pression du fluide transporté, une gaine polymérique interne d'étanchéité 18 et une carcasse interne 17 de reprise des efforts radiaux d'écrasement. Du fait de la présence de la carcasse interne 17, cette conduite est dite à passage non lisse (« rough bore» en langue anglaise). L'invention pourrait aussi s'appliquer à une conduite dite à passage lisse (« smooth-bore » en langue anglaise), ne comportant pas de carcasse interne. De même, on ne sortirait pas du champ de la présente invention en supprimant la voûte de pression 20, sous réserve que les angles d'hélice des fils constituant les nappes d'armures 14, 16 soient proches de 55° et en sens opposé. Les nappes d'armures 14, 16 sont obtenues par enroulement à pas long d'un ensemble de fils en matériau métallique ou composite, de section généralement sensiblement rectangulaire. L'invention s'appliquerait aussi si ces fils avaient une section de géométrie circulaire ou complexe, du type par exemple T autoagrafé. Sur la Figure 1, seules deux nappes d'armures 14 et 16 sont représentées, mais la conduite pourrait aussi comporter une ou plusieurs paires supplémentaires d'armures. La nappe d'armures 14 est dite externe car elle est ici la dernière, en partant de l'intérieur de la conduite, avant la gaine d'étanchéité externe. La couche de maintien 12 est généralement enroulée autour de la nappe externe 14, mais l'invention s'appliquerait aussi au cas d'une couche de maintien intercalée entre deux nappes d'armures de traction. Une telle configuration est divulguée dans le document FR 2 837 899.

La couche de maintien 12, peut être constituée de plusieurs bandes, bandelettes, rubans de maintien ou éléments unitaires enroulés à pas court autour de la nappe externe d'armures 14. Cet enroulement est généralement jointif ou avec recouvrement de façon à augmenter la capacité de reprise des efforts radiaux de gonflement. Les éléments unitaires de la couche de maintien présentent non seulement une forte résistance en traction longitudinale, suivant leur axe longitudinal, mais aussi une grande rigidité en flexion qui accroît la résistance à la déformation de la couche de maintien.

Ainsi, les éléments unitaires de maintien sont réalisés dans des matériaux appropriés, et en l'espèce dans un ruban de maintien en fibres, revêtu d'une couche de renfort en matériau polymère. Le ruban de maintien est réalisé par assemblage tissé ou non tissé desdites fibres.

Cette couche de maintien 12 est destinée à bloquer l'expansion radiale de ladite nappe d'armures, lorsqu'elle subit des efforts radiaux. Et c'est le cas lorsque la conduite flexible, étendue dans un fond marin de grande profondeur, subit un effet de fond inverse important, et que les nappes d'armures de traction 14,16 tendent à gonfler radialement sous l'effet de la compression axiale.

Afin de réaliser cette couche de maintien on fournit un ruban de maintien 22 représenté partiellement en perspective sur la Figure 2. Ce ruban de maintien 22 est apte à s'étendre longitudinalement selon un axe A. Le ruban de maintien 22 comporte plusieurs mèches et en l'espèce six mèches 24 de fibres 26, les mèches 24 étant orientées longitudinalement selon l'axe A du ruban. Les mèches 24 sont ainsi constituées de l'assemblage de fibres 26, de fils ou de filaments réalisés dans un matériau organique à haute ténacité, du type aramide, polyéthylène à haute performance ou encore polyester aromatique. Parmi les aramides, on peut citer ceux commercialisés sous la marque Kevlar® par la société du Pont de Nemours, et ceux commercialisés sous les marques Twaron® et Technora® par la société Teijin. Avantageusement on choisit le Kevlar® 49 dont les fibres présentent un module d'élasticité de l'ordre de 110 GPa mesuré selon la norme ASTM 0885-04 précitée. Elles sont juxtaposées et maintenues ensemble par des moyens de contention 28 orientés transversalement par rapport à l'axe A du ruban de maintien 22. Ces moyens de contention peuvent comporter des liens entourant l'ensemble, ou des fils de trame tissés avec les mèches 24, ces dernières constituant alors les éléments de chaîne. Les moyens de contention n'ayant pas la fonction de reprise des efforts longitudinaux de traction, ils peuvent être réalisés avec des polymères moins résistants que ceux utilisés pour les mèches 24.

On décrira ci-après en référence à la Figure 3, une méthode de réalisation, selon une première variante et grâce à une installation adaptée, d'un ruban de maintien revêtu d'une couche de renfort en matériau polymère. Pour ce faire, on fournit un ruban de maintien 30 du type précité, d'une largeur comprise entre 50 mm et 250 mm et par exemple ici de 75 mm, et d'une épaisseur comprise entre 0,5 mm et 5 mm et par exemple de 1 mm; et enroulé sur une bobine de stockage 32. Le ruban de maintien 30 traverse une tête d'extrusion 34 en équerre où il est enduit d'une couche de renfort 35, puis traverse ensuite une calandre 36 pour que le ruban de maintien 30 et la couche de renfort 35 s'interpénètrent l'un dans l'autre ; le ruban de maintien 30 ainsi revêtu est ensuite refroidi dans un échangeur thermique 38 et enfin enroulé sur une bobine de réception 40. La tête d'extrusion 34 prolonge une filière 42 qui permet de porter un matériau polymère au voisinage d'une température de fusion. Par ailleurs, simultanément, deux couches intermédiaires formées de deux voiles de fibres 44, 46, ou mats, délivrés par des rouleaux 48, 50, sont appliquées sur les deux faces opposées du ruban de maintien 30 avant l'entrée dans la tête d'extrusion 34.

Les matériaux polymères envisagés sont préférentiellement des polymères thermoplastiques dont le module d'élasticité en traction est supérieur à 300 MPa. Avantageusement, le module d'élasticité en traction du polymère est en outre inférieur à 3000 MPa, et préférentiellement inférieur à 1200 MPa. Cette gamme de modules compris entre 300 MPa et 1200 MPa permet en pratique d'obtenir un ruban de maintien présentant une rigidité en flexion suffisante pour résoudre le problème précité de fatigue, tout en évitant une rigidité excessive qui aurait pour effet défavorable de rendre difficile l'opération d'enroulement dudit ruban. Ainsi, peuvent convenir, les polyamides, les polypropylènes, les polyéthylènes, les polyesters ou encore les polymères fluorés du type PVDF. Parmi les polyamides, peuvent convenir : le polyamide 11, le polyamide 12, le polyamide 6, le polyamide 6-6, le polyamide 6-12; on retiendra ici le polyamide 11.

Ainsi, le polyamide en fusion est extrudé autour du ruban de maintien 30 et en particulier sur les deux voiles de fibres 44, 46 au fur et à mesure du déroulement. De la sorte, les deux voiles de fibres 44, 46 constitués de fibres courtes non tissées et assemblées par compactage mécanique et d'une épaisseur comprise entre 0,1 et 0,5 mm, permettent d'augmenter à la fois l'imprégnation du polymère en fusion et l'adhérence. Car en effet, les voiles de fibres 44, 46 absorbent le polyamide en fusion en jouant le rôle de buvard et augmentent par conséquent l'imprégnation des fibres des mèches. Par ailleurs, ils permettent également d'éviter que le polymère ne flue au coeur du ruban de maintien 30. De la sorte, malgré la pression induite par l'extrusion du polymère autour du ruban de maintien 30 et grâce à l'effet d'absorption des voiles de fibres, le polymère en fusion précisément, tend à recouvrir uniformément les deux faces opposées du ruban de maintien 30. Puis, le calandrage à travers la calandre 36 qui exerce une pression normale au ruban de maintien revêtu, permet de faire pénétrer légèrement le polymère visqueux en phase de refroidissement vers l'intérieur du ruban de maintien 30 pour pouvoir ensuite, après refroidissement dans l'échangeur thermique 38, emprisonner les fibres.

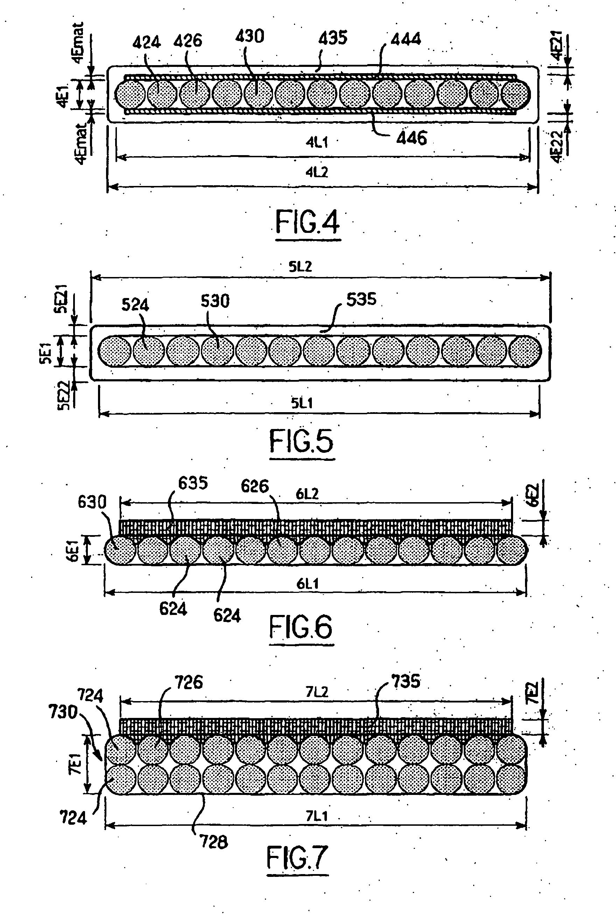

On se référera à la Figure 4 illustrant en section droite, le ruban de maintien 430 revêtu de la couche de renfort 435. On retrouve sur cette Figure, les mèches 424 de section droite circulaire et constituées de fibres 426. Le ruban de maintien 430 présente une épaisseur originelle 4E1 correspondant sensiblement au diamètre des mèches 424 et de l'ordre du millimètre et une largeur 4L1 d'environ 75 mm. Par ailleurs, on retrouve les deux voiles de fibres 444, 446, d'une épaisseur 4Emat d'environ 0,2 mm, appliqués sur les deux faces opposées du ruban de maintien 430 et recouvert de la couche de renfort 435 en polyamide. Aussi, cette couche de renfort 435, d'épaisseur 4E21= 4E22, forme-t-elle une gaine qui recouvre également la tranche du ruban de maintien 430. De préférence, l'épaisseur cumulée de la couche de renfort 435 sur les deux faces opposées du ruban de maintien 430 est supérieure au tiers de son épaisseur 4E1. Avantageusement, cette épaisseur cumulée 4E21 + 4E22 est supérieure à la moitié de l'épaisseur 4E1. Cette caractéristique confère au ruban de maintien une rigidité en flexion suffisante pour résoudre le problème précité de fatigue.

Les voiles de fibres sont constitués de fibres courtes de quelques millimètres en matériau polymère du type de celui des fibres 426 des mèches 424. Ainsi, lorsque les fibres 426 des mèches 424 sont par exemple en Kevlar® 49, les voiles de fibres 444, 446 sont constitués de fibres aramides.

Par ailleurs, toujours selon cette première variante, mais dans un autre mode de réalisation, les voiles de fibres 444, 446 sont préalablement : fixés par couture sur le ruban de maintien 430. De la sorte, il n'est nullement nécessaire de mettre en oeuvre les deux rouleaux 48, 50 représentés sur la Figure 3 et délivrant les voiles de fibres. On s'affranchit ainsi du guidage latéral de l'alimentation en voiles de fibres qui est malaisé à mettre en oeuvre simultanément avec le guidage du ruban de maintien 430.

Le tableau 1 ci-dessous illustre les dimensions d'exemples de ruban de maintien 430 revêtus.

**Tableau 1**

| | | | |
|---|---|---|---|
| 4L1 | 50 mm | 100mm | 200mm |
| 4L2 | 51 mm | 12 mm | 204 mm |
| 4E1 | 0,5 mm | 1 mm | 2 mm |
| 4E 21 | 0,2 mm | 0,2 mm | 0,5 mm |
| 4E22 | 0,2 mm | 0,2 mm | 0,5 mm |
| 4E21+4E22 | 0,4 mm | 0,4 mm | 1 mm |
| 4Emat | 0,1 mm | 0,1 mm | 0,5 mm |

Les épaisseurs 4E21 et 4E22 de la couche de renfort 435 sur les deux faces opposées du ruban de maintien 430 sont toutes les deux avantageusement comprises entre 0,2 mm et 2 mm, et préférentiellement entre 0,3 mm et 1,5 mm.

Selon encore un autre mode de réalisation, non représenté, et conformément à cette première variante, les deux tranches opposées du ruban de maintien 430 sont libres, et les deux faces opposées sont respectivement recouvertes d'un voile de fibres et d'une couche de renfort.

On se référera maintenant à la Figure 5 illustrant en section droite, un ruban de maintien 530 revêtu d'une couche de renfort 535 en matériau polymère et réalisé par la mise en oeuvre de la méthode décrite en référence à la Figure 3, selon une deuxième variante. Selon cette deuxième variante, il n'est pas appliqué de voiles de fibres entre la couche de renfort 535 et les mèches 524 du ruban de maintien 530. Ainsi, la couche de renfort 535 forme également une gaine autour du ruban de maintien 530 et elle est obtenue en appliquant directement le polymère extrudé sur le ruban de maintien.

Pour ce faire, la température du polymère extrudé par la tête d'extrusion 34 est ajustée afin que sa viscosité soit à une valeur sensiblement supérieure, par rapport à celle qui est envisagée pour revêtir un ruban de maintien 530 recouvert de voiles de fibres, tel qu'illustré sur la Figure 4, de manière à éviter que ce polymère ne flue complètement à travers le ruban de maintien 530, et afin qu'il puisse former une couche cohérente en surface. Bien évidemment, la nature du matériau polymère peut également être adaptée en conséquence.

On se référera à présent à la Figure 6 représentant en section droite et selon une troisième variante de réalisation, un ruban de maintien 630 revêtu d'une couche de renfort 635 sur une seule face. Un tel ruban de maintien 630 revêtu est susceptible d'être réalisé selon la méthode décrite ci-dessus en référence à l'installation illustrée sur la Figure 3. Toutefois, ladite installation est modifiée sensiblement de manière à extruder directement et sur une seule face seulement du ruban de maintien 630, le matériau polymère destiné à former la couche de renfort 635. Par ailleurs, il est nécessaire, ainsi que l'illustre la Figure 6, que le matériau polymère flue légèrement entre les mèches 624 de manière à imprégner un plus grand nombre de fibres 626 et aussi de prévoir des moyens de contention des mèches 624, afin d'obtenir une meilleure solidarisation de la couche de renfort 635 et du ruban de maintien 630. Au surplus, la température du polymère extrudé est augmentée afin de diminuer la viscosité de ce polymère, de façon à ce qu'il pénètre aussi à l'intérieur des mèches 624 de fibres 636. Les liaisons mécaniques entre la couche de renfort 635 et le ruban de maintien 630 n'en seront que renforcées, après refroidissement du polymère. La couche de renfort 635 est centrée sur le ruban de maintien 630 et elle s'étend sur une largeur 6L2 sensiblement inférieure à la largeur 6L1 du ruban de maintien 630. Avantageusement, l'épaisseur 6E2 de la couche de renfort 635 est supérieure au tiers de l'épaisseur 6E1 du ruban de maintien 630 et de préférence supérieure à la moitié. Ainsi, ce critère d'épaisseur qui conditionne indirectement l'inertie globale de la couche de maintien 630 revêtu, conditionne par là même, la résistance à la flexion. Par ailleurs, le module d'élasticité (module d'Young) du matériau polymère, ici du polyamide 11, est supérieur à 300 MPa à température ambiante.

Toutefois, selon un mode particulier de mise en oeuvre, conformément à cette troisième variante de réalisation, il est prévu de revêtir les deux faces apposées du ruban de maintien 630 d'une couche de renfort 635. De la sorte, les deux faces opposées du ruban de maintien 630 sont susceptibles d'être préservées de l'usure par frottement. Au surplus, le ruban de maintien 630 présente une rigidité en flexion plus importante et par conséquent une plus grande résistance à la fatigue.

Selon une quatrième variante de réalisation illustrée sur la Figure 7, un ruban de maintien 730 est constitué de plusieurs couches superposées et en l'espèce de deux couches superposées de mèches 724 de fibres 726 reliées ensemble par des moyens de contention appropriés 728. De la sorte, la résistance mécanique en traction du ruban de maintien 730 est augmentée par rapport aux rubans de maintien monocouche des variantes de réalisation précitées.

Le ruban de maintien 730 est revêtu d'une couche de renfort 735 sensiblement similaire à la couche de renfort 635 recouvrant le ruban de maintien 630 monocouche illustré sur la Figure 6.

En outre, avantageusement, une couche anti-usure (« anti-wear layer » en anglais) en matériau polymérique peut être intercalée entre la nappe externe d'armures de traction 14 et la couche de maintien 12. Cette solution permet d'augmenter la durée de vie de la couche de maintien 12, d'une part en supprimant le phénomène d'usure au contact avec les armures métalliques, et d'autre part en réduisant le phénomène précité de fatigue. Les couches anti-usures, qui sont bien connues de l'homme du métier, sont généralement réalisées par enroulement hélicoïdal d'un ou plusieurs rubans obtenus par extrusion d'un matériau polymérique à base de polyamide, de polyoléfines, ou de PVDF (« polyvinylidene fluoride » en anglais). On pourra aussi se reporter au document WO2006/120320 qui décrit des couches anti-usure constituées de rubans en polysulfone (PSU), polyethersulfone (PES), polyphenylsulfone (PPSU), polyetherimide (PEI), polytétrafluoroéthylène (PTFE), polyétheréthercétone (PEEK) ou polysulfure de phénylène (PPS). Dans les variantes non représentées où une couche de maintien est placée entre les deux nappes d'armures de traction 14, 16, il serait avantageux d'intercaler deux couches anti-usure en contact respectivement avec les faces interne et externe de cette couche de maintien, de façon à éviter que les fibres de polymère de cette couche de maintien ne puissent être en contact direct avec l'une de ces deux nappes d'armures.

S'agissant maintenant des méthodes de production des rubans de maintien revêtus, trois autres méthodes de réalisation non représentées peuvent être mises en oeuvre.

Selon une première des autres méthodes de réalisation, et en reprenant l'installation illustrée sur la Figure 3, le matériau polymère est extrudé directement sur le ruban de maintien, sur les deux surfaces opposées, et ensuite sont appliquées successivement et sur chacune de ses deux faces opposées, un voile de fibres et un film en polyamide thermoplastique. L'ensemble à cinq couches est alors ensuite calandré puis refroidi. De la sorte, les voiles de fibres sont pris en sandwich entre le matériau polymère extrudé, en cours de durcissement et le film de polyamide thermoplastique ; et lorsque l'ensemble est calandré à chaud, le film de polyamide se ramollit et sous l'effet de la pression exercée par la calandre, traverse au moins partiellement le voile de fibres pour rejoindre le matériau polymère. Ainsi, le matériau polymère et le polyamide du film tendent à former une seule phase et emprisonne par la même le voile de fibres. Cette structure complexée, permet d'obtenir une grande rigidité en flexion du ruban de maintien revêtu.

Selon la deuxième autre méthode de réalisation, sur chacune des deux faces opposées du ruban de maintien, sont appliquées successivement un voile de fibres et un film en polyamide, l'ensemble étant ensuite calandré à chaud. De la sorte, en traversant la calandre et moyennant un réglage adapté de la température de calandrage, les films de polyamide se ramollissent pour ne former qu'une seule phase qui traverse les voiles de fibres mais aussi qui flue à travers les fibres des mèches du ruban de maintien. Une telle méthode présente l'avantage de s'affranchir de moyens d'extrusion relativement coûteux et encombrants.

Selon la troisième autre méthode de réalisation, le revêtement polymérique du ruban de maintien est réalisé par un procédé de dépôt de poudre thermoplastique suivi d'une étape de calandrage à chaud. Le ruban préalablement chargé en électricité statique est tout d'abord plongé dans une enceinte contenant un lit fluidisé de fines particules de polymère en suspension dans de l'air comprimé. Au cours de cette étape, du fait de la force d'attraction due aux charges électrostatiques, le ruban se trouve revêtu d'une couche desdites fines particules. Au cours de l'étape suivante de calandrage à chaud, la couche de fines particules polymériques est ramollie, fondue et ainsi solidarisée avec les mèches de fibres du ruban. Cette méthode présente elle aussi l'avantage de s'affranchir de moyens d'extrusion.

## Revendications

1. Conduite flexible sous-marine destinée au transport des hydrocarbures, ladite conduite flexible comprenant, de l'intérieur vers l'extérieur, une gaine d'étanchéité interne (18), au moins une nappe d'armures de traction (14,16) enroulée à pas long autour de ladite gaine d'étanchéité interne, une couche de maintien déformable (12) comprenant au moins un ruban de maintien (34) flexible enroulé à pas court autour de ladite nappe d'armures de traction, et au moins une structure tubulaire (10) qui entoure ladite couche de maintien, ledit ruban de maintien comportant des mèches de fibres, lesdites mèches étant orientées sensiblement selon la direction longitudinale dudit ruban de maintien, ledit ruban de maintien étant revêtu d'une couche de renfort en matériau polymère pour augmenter la résistance à la déformation de ladite couche de maintien ;
**caractérisée en ce que** ledit ruban de maintien comprend une couche textile intercalée entre lesdites mèches de fibre et ladite couche de renfort.

2. Conduite flexible sous-marine selon la revendication 1, **caractérisée en ce que** ladite couche de renfort et ledit ruban de maintien sont au moins partiellement interpénétrés l'un dans l'autre.

3. Conduite flexible sous-marine selon la revendication 1 ou 2, **caractérisée en ce que** lesdites fibres présentent à température ambiante un module d'élasticité supérieur à 50 GPa.

4. Conduite flexible sous-marine selon l'une quelconque des revendications 1 à 3, **caractérisée en ce que** lesdites mèches de fibres comportant des fibres de cœur entourées par des fibres de surfaces, une portion desdites fibres de surface est noyée à l'intérieur dudit matériau polymère de ladite couche de renfort pour relier ensemble ladite couche de renfort et ledit ruban de maintien.

5. Conduite flexible sous-marine selon l'une quelconque des revendications 1 à 4, **caractérisée en ce que** ledit ruban de maintien comporte en outre des moyens de contention pour maintenir ensemble lesdites mèches de fibres.

6. Conduite flexible sous-marine selon l'une quelconque des revendications 1 à 5, **caractérisée en ce que** les fibres desdites mèches sont maintenues ensemble les unes contre les autres.

7. Conduite flexible sous-marine selon l'une quelconque des revendications 1 à 6, **caractérisée en ce que** ledit ruban de maintien comprenant deux faces opposées l'une de l'autre, chacune desdites faces est recouverte de ladite couche de renfort.

8. Conduite flexible sous-marine selon l'une quelconque des revendications 1 à 7, **caractérisée en ce que** ladite couche de renfort forme une gaine autour dudit ruban de maintien.

9. Conduite flexible sous-marine selon l'une quelconque des revendications 1 à 8, **caractérisée en ce que** ledit matériau polymère est un matériau thermoplastique.

10. Conduite flexible sous-marine selon l'une quelconque des revendications 1 à 9, **caractérisée en ce que** ladite couche de renfort est obtenue par extrusion dudit matériau polymère.

## Patentansprüche

1. Flexible Unterwasser-Rohrleitung für den Transport von Kohlenwasserstoffen, wobei die flexible Rohrleitung, von innen nach außen, Folgendes umfasst: einen inneren Dichtungsmantel (18), mindestens eine Schicht aus Zugbewehrungen (14, 16), die um den inneren Dichtungsmantel gewickelt ist, eine verformbare Halteschicht (12), die mindestens ein flexibles Halteband (34), das um die Schicht aus Zugbewehrungen gewickelt ist, und mindestens eine rohrförmige Struktur (10), welche die Halteschicht umgibt, umfasst, wobei das Halteband Faserlunten aufweist, wobei die Lunten im Wesentlichen in der Längsrichtung des Haltebands orientiert sind, wobei das Halteband mit einer Verstärkungsschicht aus Polmermaterial beschichtet ist, um die Formbeständigkeit der Halteschicht zu erhöhen; **dadurch gekennzeichnet, dass** das Halteband eine textile Schicht umfasst, die zwischen den Faserlunten und der Verstärkungsschicht angeordnet ist.

2. Flexible Unterwasser-Rohrleitung nach Anspruch 1, **dadurch gekennzeichnet, dass** die Verstärkungsschicht und das Halteband einander mindestens teilweise durchdringen.

3. Flexible Unterwasser-Rohrleitung nach Anspruch 1 oder 2, **dadurch gekennzeichnet, dass** die Fasern bei Umgebungstemperatur einen Elastizitätsmodul von mehr als 50 GPa aufweisen.

4. Flexible Unterwasser-Rohrleitung nach einem der Ansprüche 1 bis 3, **dadurch gekennzeichnet, dass** die Faserlunten Kernfasern aufweisen, die von Oberflächenfasern umgeben sind, wobei ein Teil der Oberflächenfasern in das Innere des Polymermaterials der Verstärkungsschicht eingebettet ist, um die Verstärkungsschicht und das Halteband miteinander zu verbinden.

5. Flexible Unterwasser-Rohrleitung nach einem der Ansprüche 1 bis 4, **dadurch gekennzeichnet, dass** das Halteband ferner Stützmittel aufweist, um die Faserlunten zusammenzuhalten.

6. Flexible Unterwasser-Rohrleitung nach einem der Ansprüche 1 bis 5, **dadurch gekennzeichnet, dass** die Fasern der Lunten gegeneinander zusammengehalten werden.

7. Flexible Unterwasser-Rohrleitung nach einem der Ansprüche 1 bis 6, **dadurch gekennzeichnet, dass** das Halteband zwei einander entgegengesetzte Seiten umfasst, wobei jede der Seiten mit der Verstärkungsschicht beschichtet ist.

8. Flexible Unterwasser-Rohrleitung nach einem der Ansprüche 1 bis 7, **dadurch gekennzeichnet, dass** die Verstärkungsschicht eine Hülle um das Halteband herum bildet.

9. Flexible Unterwasser-Rohrleitung nach einem der Ansprüche 1 bis 8, **dadurch gekennzeichnet, dass** das Polymermaterial ein thermoplastisches Material ist.

10. Flexible Unterwasser-Rohrleitung nach einem der Ansprüche 1 bis 9, **dadurch gekennzeichnet, dass** die Verstärkungsschicht durch Extrusion des Polymermaterials hergestellt ist.

## Claims

1. A subsea flexible pipe for transporting oil and gas, said flexible pipe comprising, from the inside to the outside, an inner sealing sheath (18), at least one ply of traction armor (14, 16) wound in a long pitch around said inner sealing sheath, a deformable holding layer (12) comprising at least one flexible holding band (34) wound in a short pitch around said ply of traction armors, and at least one tubular structure (10) surrounding said holding layer, said holding band comprising strands of fibers, said strands being oriented substantially in the longitudinal direction of said holding band, said holding band being covered with a reinforcing layer of polymer material to increase the deformation resistance of said holding layer ;
**characterized in that** said holding band comprises a textile layer inserted between said strands of fibers and said reinforcing layer.

2. The subsea flexible pipe as claimed in claim 1, **characterized in that** said reinforcing layer and said holding band penetrate into one another at least partially.

3. The subsea flexible pipe as claimed in either of claims 1 and 2, **characterized in that** said fibers have an elastic modulus higher than 50 GPa at ambient temperature.

4. The subsea flexible pipe as claimed in any one of claims 1 to 3, **characterized in that** said strands of fibers comprise core fibers surrounded by surface fibers, a portion of said surface fibers is embedded in said polymer material of said reinforcing layer to join said reinforcing layer to said holding band.

5. The subsea flexible pipe as claimed in any one of claims 1 to 4, **characterized in that** said holding band further comprises retaining means for holding said strands of fibers together.

6. The subsea flexible pipe as claimed in any one of claims 1 to 5, **characterized in that** the fibers of said strands are held together against one another.

7. The subsea flexible pipe as claimed in any one of claims 1 to 6, **characterized in that** said holding band comprises two faces opposite one another, each of said faces being covered with said reinforcing layer.

8. The subsea flexible pipe as claimed in any one of claims 1 to 7, **characterized in that** said reinforcing layer forms a sheath around said holding band.

9. The subsea flexible pipe as claimed in any one of claims 1 to 8, **characterized in that** said polymer material is a thermoplastic.

10. The subsea flexible pipe as claimed in any one of claims 1 to 9, **characterized in that** reinforcing layer is obtained by extruding said polymer material.
